# EUROPEAN PATENT APPLICATION

(11) **EP 2 866 456 A1**
(43) Date of publication of application: **29.04.2015**
(21) Application number: 14189622.5
(22) Date of filing: 21.10.2014
(51) Int. Cl.: H04N 21/422, H04N 21/4223, H04N 21/2187, H04N 21/4788, H04N 21/61, H04N 21/643, H04N 21/2343, H04L 29/06

(54) **System and method for capturing live audio and video from a computational device and propagating the audio and video to a digital PBX using only a standards-based WEBRTC-compliant web browser**

(30) Priority: 22.10.2013 US 201314060546
(71) Applicant: ON24, Inc., San Francisco, CA 94103 (US)
(72) Inventor: Rojas, Brent, San Ramon, CA California 94583 (US); Sahasi, Jayesh, Los Altos, CA California 94024 (US)
(74) Representative: Sieckmann, Dirk Christoph

(57) **Abstract**

A system and method for capturing live audio and video from a computational device and propagating the audio and video to a digital public exchange system (PBX) using only a standards-based webRTC-compliant web browser are provided.

## Description

### Field

The disclosure is relevant in the field of live web-based content presentations (webcasts) that include audio and video streams that are captured from the camera and microphone of a handheld or desktop computational device.

### Background

With typical webcasting systems, it is not possible to capture live audio and video from multiple Presenters' computational devices, switch seamlessly between the media stream sources, and transcode the sources to various media formats that can be consumed by audience members on desktop and handheld computational devices without the use of proprietary plugins or applications to capture the audio and video from the Presenters' computational devices.

There are currently very limited ways to capture audio and video from a computational device and transmit it back to a centralized media server. All of the current solutions require either third-party web browser plug-ins or applications that require installation. That is often problematic in an enterprise environment where the users have little latitude in customizing or modifying their computational devices. Specifically, an enterprise will often have strict policies against downloading anything that can be installed.

The presently available solutions to the above problem include: 1) using Flash to obtain access to the computational devices microphone and camera; or 2) using an installable application, such as WebEx to obtain access to the computational devices microphone and camera. Both the above solutions are problematic for various reasons including: 1) Flash requires a third-party plug-in that may not be universally available; 2) Flash provides a limited set of codecs and the quality and performance is therefore constrained; and 3) WebEx is a proprietary technology that has limited options for integration with other media processing applications.

### Brief Description of the Drawings

Figure 1 is a diagram of a stream capturing system;
Figure 2 illustrates an example of an implementation of the stream capture system;
Figure 3 illustrates a method for stream capturing;
Figures 4 and 5 are diagrams illustrating a webcasting system that may utilize the stream capturing system;
Figure 6 illustrates a system architecture of the online presentation system shown in Figure 5; and
Figure 7 is a functional diagram of the interacting components of the online presentation system in Figure 6.

### Detailed Description of One or More Embodiments

A system and method for capturing live audio and video from a computational device and propagating the audio and video to a digital pbx using only a standards-based webrtc-compliant web browser are provided.

The disclosure is particularly applicable to the capture of a stream for a webcasting system and it is in this context that the disclosure will be described. It will be appreciated, however, that the system and method has greater utility since it may be implemented in different manners than those set forth below and may be used with any system in which it is desirable to capture a stream of audio and visual data.

The stream capturing system and method described in the disclosure may use standards-compliant, non-proprietary technologies for easier integration into media-stream transcoding processes. Additionally, non-proprietary codecs will sometimes provide better audio and video quality and performance.

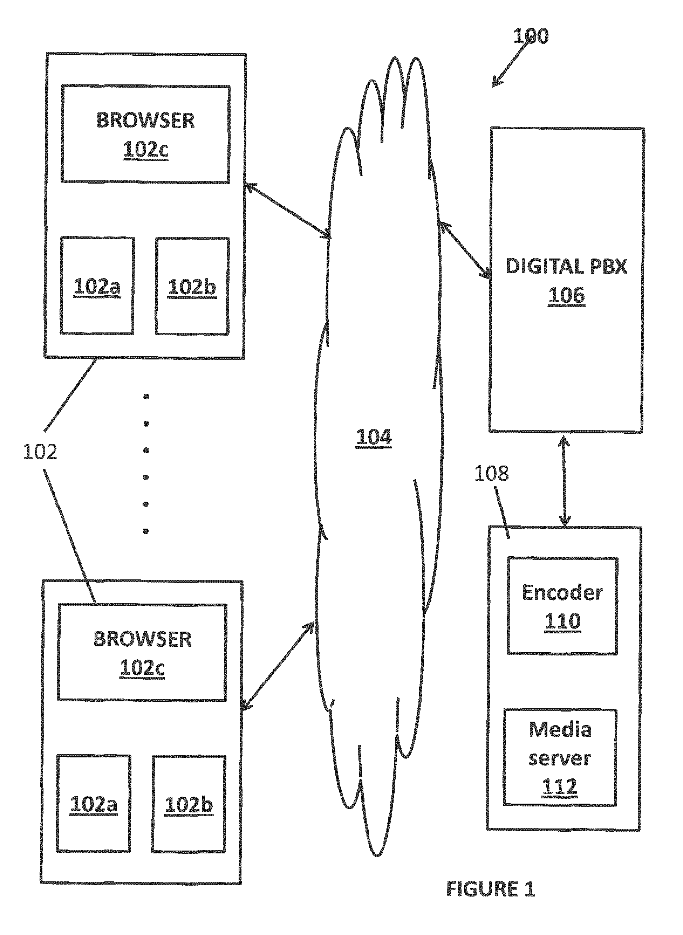

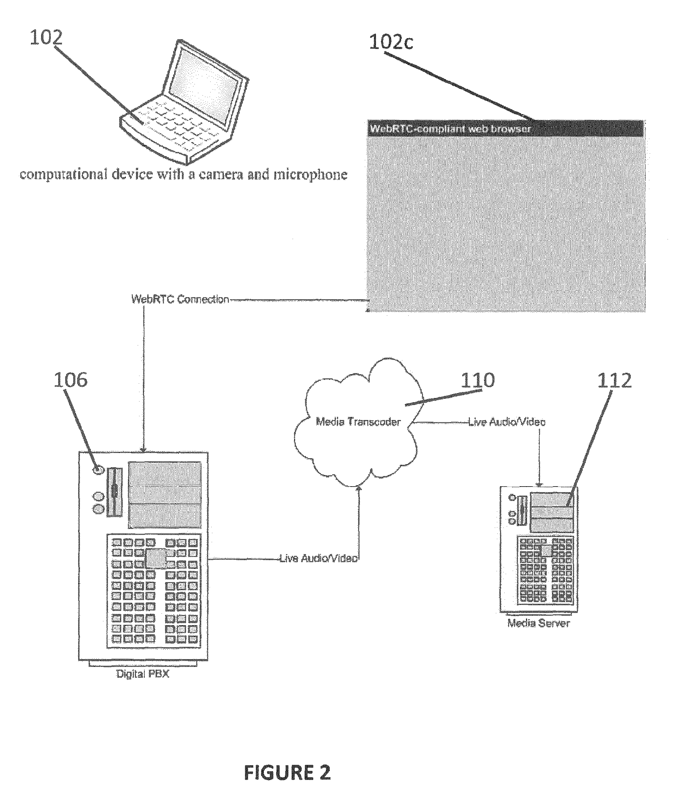

Figures 1 and 2 are a diagram of a stream capturing system 100 and illustrate an example of an implementation of the stream capture system, respectively. The stream capture system may comprises one or more computing devices 102 that may be connectable over a communications path 104 to a server or other computer system 106 that is able to handle an incoming webRTC stream. For example the computer system 106 maybe a digital public exchange system (PBX). In one implementation, the digital PBX may be implemented using Asterix which is an open source PBX. In addition, the computer system 106 may be a computer having a plurality of lines of computer code that handle the incoming WebRTC stream.

Each computing device 102 may be have at least one processor, memory and a wireless or wired connectivity circuit that are coupled to each other and that allow the computing device to connect to and interact to the computer system 106. For example, each computing device 102 may be a smartphone device, such as an Apple product, and Android based device or other devices, a personal computer, a tablet computer, a desktop computer, a game console, a standalone stream capturing device and the like. Each computing device 102 may also have at least one stream capturing device that may be used to capture a stream of data from a user of the computing device, such as an audio stream, a video stream or a picture stream. For example, each computing device 102 may have a sound capturing device 102a, such as a microphone and an image capturing device 102b, such as a camera. The computing device 102 may also store in memory and execute using the processor a browser application 102c that may be a webRTC compliant browser application. webRTC is a commercially available protocol and further details of the webRTC protocol may be found at http://wwv.webrtc.org/ and the contents of that website are incorporated herein by reference.

The communication path 104 may be a wired or wireless network, link, etc. For example, the communication path may be Ethernet, a wireless data network, a wireless or wired computer network, a satellite network or a combination of one or more of the above that allow each computing device to couple to the digital PBX and interact with the digital PBX using a particular protocol, such as the webRTC protocol. The computer system 106 may be a commercially available digital PBX that is capable of receiving the captured stream data using the webRTC protocol.

The stream capturing system 100 may also include an encoder 110, such as a media transcoder, that receives live data streams (audio, video or both streams) and encodes those captured data streams and then communicates those encoded streams to a media server 112. The encodings may be streams in FLV or F4V (Flash), H.264, and various other formats for delivery to a wide array of devices. The media server may then distribute the encoded captured data streams to audience members such as in a webcasting system. The encoder 110 and media server 112 are well known components and may be implemented in hardware or software.

The webRTC protocol and WebRTC applications (that use the webRTC protocol) have typically focused on peer-to-peer communications. For example, two persons, each with WebRTC-compliant browsers, have been able to establish a simple connection for a video chat. The simple connection is insufficient for a media streaming. However, the stream capturing system, using the webRTC protocol, may receive the media in a central location and convert the media streams to multiple commonly-used media formats (at which point the media streaming system, such as a webcasting system, may wrap additional metadata around the streams and make the encoded media streams available to thousands of audience members). The common media formats that may be used may include Flash, MPEG-DASH, and H.264, encoded for various media players and bandwidths, as well as other formats that become more prevalent in the future.

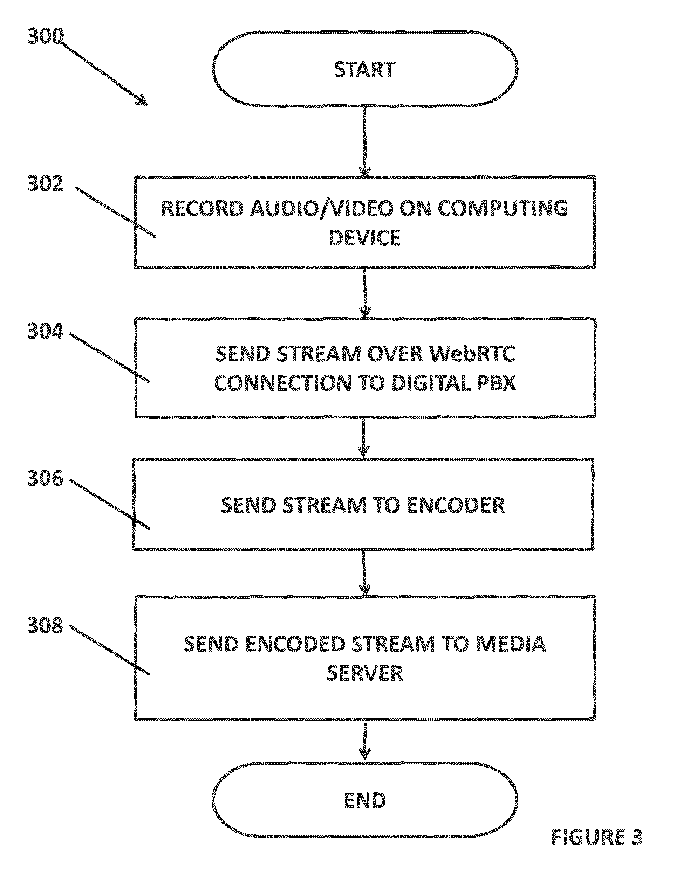

Figure 3 illustrates a method 300 for stream capturing. The method 300 may be implemented, for example, using the stream capture system shown in Figures 1-2. In the method, a data stream, such as audio and/or video and/or images, may be captured at a computing device (302). The computing device may send the captured data stream over a webRTC connection to a digital PBX (304), such as by using a webRTC complaint browser application. Since the method (and system above) use the webRTC connection and a web browser, the system and method do not require a plug-in or an installed application on the computing device to capture the data streams. The public PBX may then send the captured stream(s) onto an encoder (306) which then send the encoded streams onto a media server (308) so that the encoded captured streams may be delivered to one or more audience members, such as audience members in a webcasting system.

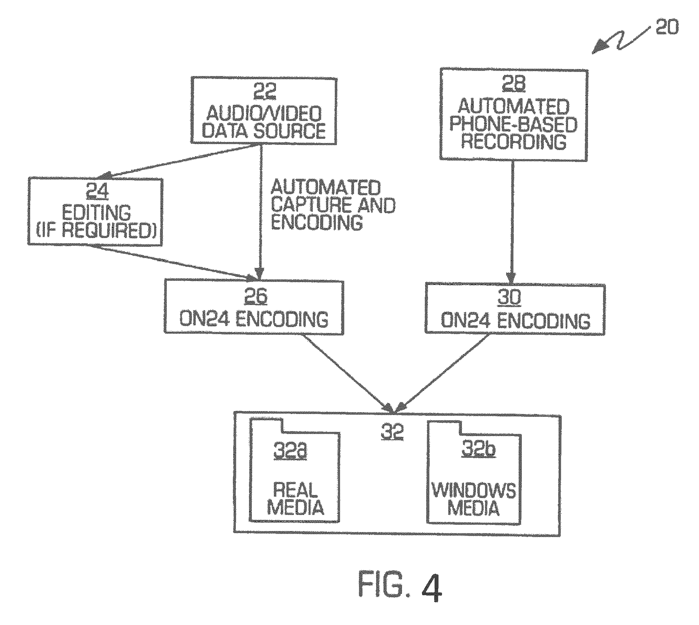

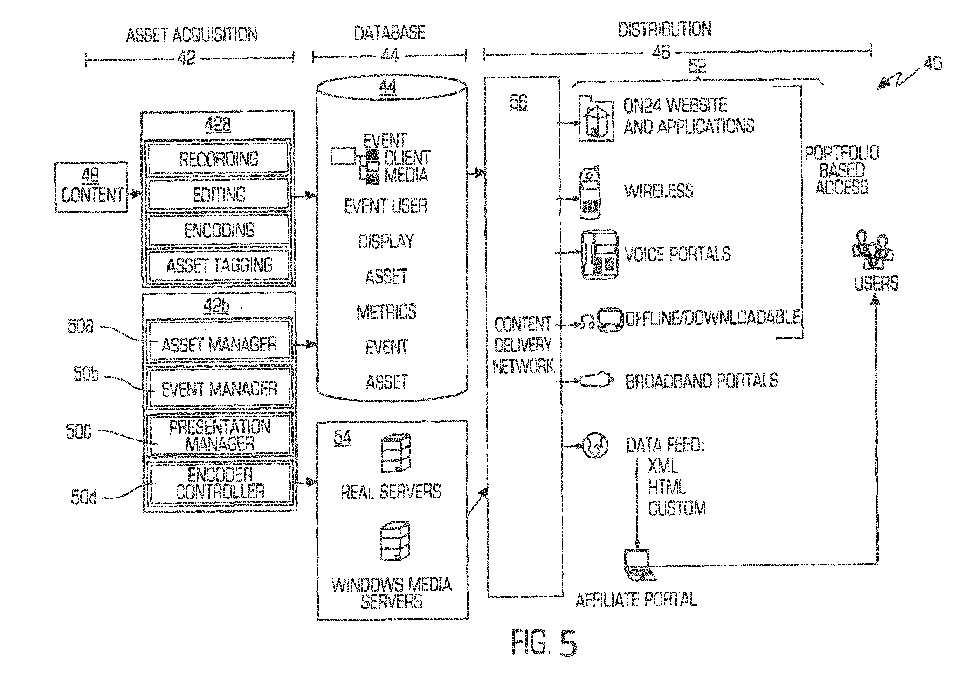

Figure 4 is a diagram illustrating a method 20 for asset acquisition for online presentation event system in which the audio/video capture 22 may be performed using the stream capture system described above. In a webcasting system, in step 26, the data source 22 is encoded. Alternatively, an automated phone-based recording source 28 is encoded in step 30. The encoded data may then be stored in a media database 32, such as in a real media format 32a and/or a windows media format 32b. In this manner, a data source/piece of media is prepared for distribution using an event system, an example of which is shown in Figure 5.

Figure 5 is a diagram illustrating an event system 40 into which the presentation timeline annotation apparatus may be incorporated. The event system 40 may comprise an asset acquisition and event management portion 42, a database portion 44 and a distribution portion 46 wherein a piece of media/content 48 is input into the event system 40 in order to distribute that content/piece of media during the event. Generally, each element of the event system being described is implemented in software wherein each portion may be one or more software modules and each software module may be a plurality of computer instructions being executed to perform a particular function/operation of the system. Each element of the system may thus be implemented as one or more computer resources, such as typical personal computers, servers or workstations that have one or more processors, persistent storage devices and memory with sufficient computing power in order to store and execute the software modules that form the frame event system in accordance with the invention. The event system may generate an event that is provided to one or more event clients 52 wherein each client is a computing resource, such as a personal computer, workstation, cellular phone, personal digital assistant, wireless email device, telephone, etc. with sufficient computing power to execute the event client located on the client wherein the client communicates with the event system over a wired or wireless connection.

In more detail, the asset acquisition and event management portion 42 may further comprise an asset acquisition portion 42a and an event management portion 42b wherein the asset acquisition portion performs one or more of the following functions: recording of the piece of media/content, editing of the piece of media/content, encoding of the piece of media/content and asset tagging. The event manager module 42b further comprises an asset manager module 50a, an event manager module 50b, a presentation manager module 50c and an encoder controller 50d. The asset manager module 50a, prior to an event, imports/exports content/pieces of media into/from a library of media as needed and manages the assets for each event presentation. The event manager module 50b may perform actions/function prior to and after an event. Prior to a particular event, the event manager module may reserve the event in the system (both resources and access points), set-up an event console which a user interacts with to manage the event and then send messages to each recipient of the upcoming event with the details of how to access/operate the event. After a particular event, the event manager module 50b may permit a user to import an old event presentation into the system in order to re-use one or more pieces of the old event presentation. The presentation manager module 50c, during a particular event presentation, generates an event file with the slides of the event presentation, URLs and polls to an encoder controller to distribute the particular event presentation to the users. The encoder controller 50d encodes the event presentation stream to one or more distribution server 54 that distributes the event presentation to the users.

As shown in Figure 5, the database 44 may include data about each event, including the clients to which the event is being provided and the media associated with the event, one or more event users, the display of the particular event, the assets associated with the event, the metrics for the event and other event data. In combination with this data in the database for a particular event, operations and commands from the event manager module 42b are downloaded to the distribution servers 54 that distribute each event to each client 52 for the particular event over a distribution network 56. As shown, the event/presentation maybe distributed to one or more different clients 52 that use one or more different methods to access the event. The clients 52 may include a client that downloads the presentation and then views the presentation offline.

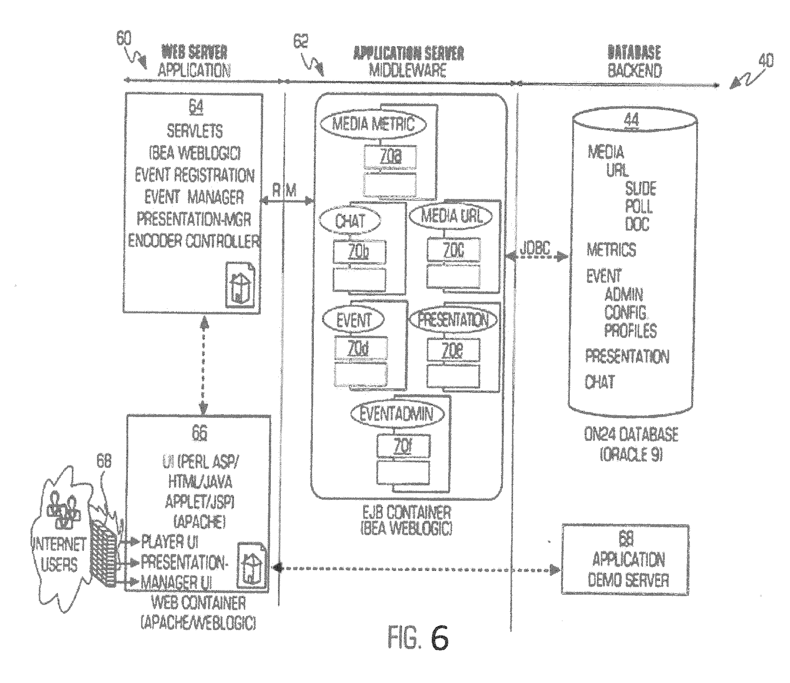

Figure 6 illustrates more details of the event system shown in Figure 5. The event system may include a web server portion 60, an application server portion 62 and the database portion 40 (with the database 44) shown in Figure 5. Each of these portions may be implemented as one or more computer resources with sufficient computing resources to implement the functions described below. In a preferred embodiment, each portion may be implemented as one or more well-known server computers. The web server portion 60 may further comprise one or more servlets 64 and a web container portion 66 which are both behind a typical firewall 68. In a preferred embodiment of the invention, the servlets reside on a BEA Weblogic system which is commercially available and may include an event registration servlet, an event manager module servlet, a presentation manager module servlet and an encoder controller servlet that correspond to the event manager module 50b, presentation manager module 50c and encoder controller 50c shown in Figure 5. Each of these servlets implement the functions and operations described above for the respective portions of the system wherein each servlet is a plurality of lines of computer code executed on a computing resource with sufficient computing power and memory to execute the operations. The servlets may communicate with the application server portion 62 using well-known protocols such as, in a preferred embodiment, the well-known remote method invocation (RMI) protocol. The servlets may also communicate with the web container portion 66 which is preferable implemented using an well-known Apache/Weblogic system. The web container portion 66 generates a user interface, preferably using Perl, Active Server Page (ASP), HTML, XML/XSL, Java Applet, Javascript and Java Server Pages (JSPs.) The web container portion 66 may thus generate a user interface for each client and the presentation manager module user interface. The user interface generated by the web container portion 66 may be output to the clients of the system through the firewall as well as to an application demo server 68 that permits a demo of any presentation to be provided.

The application server portion 62 may preferably be implemented using an Enterprise JavaBeans (EJBs) container implemented using an Oracle Weblogic product that is commercially sold. The application server management portion 62 may be known as middleware and may include a media metric manager 70a, a chat manager 70b, a media URL manager 70c, an event manager 70d, a presentation manager 70e and an event administration manager 70f which may each be software applications performed the specified management operations. The application server portion 62 communicates with the database 44 using a protocol, such as the well-known Java Database Connectivity (JDBC) protocol in a preferred embodiment of the invention. The database 44 may preferably be implemented using an Oracle 12 database product that is commercially available. As shown, the database 44 may include media data including URL data, slide data, poll data and document data. The database 44 may further include metric data, event data and chat data wherein the event data may further preferably include administration data, configuration data and profile data.

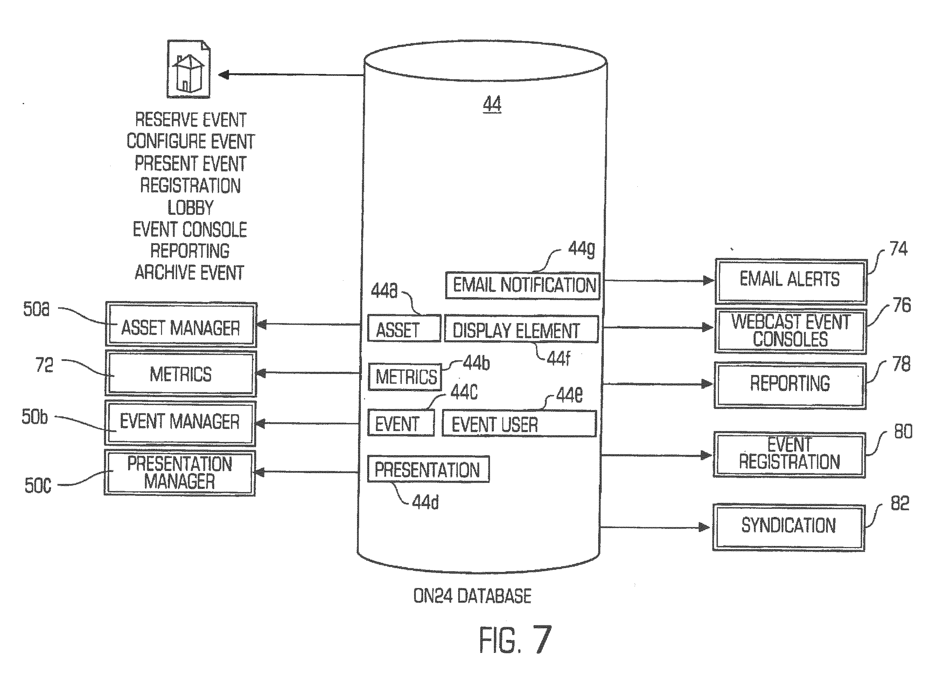

Figure 7 is a diagram illustrating more details of the event database 44 in Figure 6. As shown in Figure 7, the database may generate data that is used to implement a function to reserve an event, to configure an event, present an event, for registration, for the lobby for the event console, for reporting and for archiving an event. The database may include asset data 44a that may be provided to the asset manager module 50a, metrics data 44b that is provided to a metric module 72, event data 44c that is provided to the event manager module 50b, presentation data 44d that is provided to the presentation manager module 50c, event user data 44e that is provided to an event registration module 80, display element data 44f that is provided to an event consoles module 76 and email notification data 44g that is provided to an email alerts module 74. The database may also store data that is used by a reporting module 78 to generate reports about the events and presentations provided by the system. The database may also store data that is used by a syndication module 82 to syndicate and replicate existing presentations.

This webcasting system shown in Figures 4-7 may be used with the stream capture system and method described with reference to Figures 1-3. For example, using the stream capture system 100 shown in Figures 1 and 2, a user of a computing device 102 may act as Presenters in an online live audio and video Presentation, also called a Webcast. The computing device may establish a WebRTC connection (described in more detail at http://www.webrtc.org/ that is incorporated herein by reference) to the computer system 106. The computer system 106 may then propagate the live audio and video to a transcoder 110, such as known FFMPEG, and then on to a media server 112, making the live media streams available to a large and geographically-dispersed audience.

While the foregoing has been with reference to a particular embodiment of the invention, it will be appreciated by those skilled in the art that changes in this embodiment may be made without departing from the principles of the disclosure, the scope of which is defined by the appended claims.

## Claims

1. A system, comprising:
one or more computing devices wherein each computing device has at least a stream capture device that is capable of capturing a stream of data that forms a captured stream;
a computer system coupled to each computing device, wherein each computing device communicates the captured stream using a webRTC protocol to the computer system; and
an encoder coupled to the computer system that encodes the captured stream received at the computer system.

2. The system of claim 1 further comprising a media system that receives the encoded stream from the computing device.

3. The system of claim 1 or 2, wherein the stream capture device further comprises a microphone and a camera that are capable of capturing a stream of audio data and a stream of visual data that form a captured stream.

4. The system of one of claims 1 to 3, wherein each computing device has a webRTC compliant browser application that is executed by a processor of the computing device to capture the stream of data.

5. A method comprising:
capturing a stream comprising one or more of an audio stream and a video stream using a computing device;
communicating the stream using a webRTC protocol to a computer system; and
encoding the stream received at the computer system to generate an encoded stream.

6. The method of claim 5 further comprising providing the encoded stream to a media server.

7. The method of claim 5 or 6, wherein capturing the stream further comprising capturing an audio stream using a microphone of the computing device and capturing a video stream using a camera of the computing device.

8. The method of one of claims 5 to 7, wherein capturing the stream further comprising executing a webRTC compliant browser application on the computing device to capture the stream of data.

9. The method of one of claims 5 to 8, wherein each computing device does not have one of a plug-in and an installed application to capture the stream of data.

10. A webcasting system, comprising:
one or more computing devices wherein each computing device has at least a stream capture device that is capable of capturing a stream of data that forms a captured stream;
a computer system coupled to each computing device, wherein each computing device communicates the captured stream using a webRTC protocol to the computer system;
an encoder coupled to the computer system that encodes the captured stream received at the computer system; and
a webcasting system that receives the encoded stream and delivers the encoded stream to one or more audience members.

11. The system of claim 10, wherein the webcasting system further comprises a media server that receives the encoded stream.

12. The system of claim 10 or 11, wherein the stream capture device further comprises a microphone and a camera that are capable of capturing a stream of audio data and a stream of visual data that form a captured stream.

13. The system of one of claims 10 to 12, wherein each computing device has a webRTC compliant browser application that is executed by a processor of the computing device to capture the stream of data.

14. The system of one of claims 1 to 4 or 10 to 13, wherein each computing device does not have one of a plug-in and an installed application to capture the stream of data.

15. The system of one of claims 1 to 4 or 10 to 14, wherein the computer system is a digital PBX.
